# EUROPÄISCHE PATENTSCHRIFT

(11) **EP 2 376 308 B1**
(45) Veröffentlichungstag und Bekanntmachung des Hinweises auf die Patenterteilung: **01.07.2015**
(21) Anmeldenummer: 09801423.6
(22) Anmeldetag: 08.12.2009
(51) Int. Cl.: B60N 2/235

(54) **RASTBESCHLAG ZUM VERRASTEN ZWEIER FAHRZEUGTEILE**
LATCH FITTING FOR LOCKING TWO VEHICLE COMPONENTS
MÉCANISME D'ARRÊT POUR LE VERROUILLAGE DE DEUX ÉLÉMENTS D'UN VÉHICULE

(30) Priorität: 09.12.2008 DE 102008061147
(43) Veröffentlichungstag der Anmeldung: 19.10.2011
(73) Patentinhaber: Brose Fahrzeugteile GmbH & Co. KG, Coburg, 96450 Coburg (DE)
(72) Erfinder: FAßBENDER, Frank, 96450 Coburg (DE); STEFFEN, Oliver, 96450 Coburg (DE); ZELLMANN, Michael, 96120 Bischberg (DE)
(74) Vertreter: Schröder, Christoph
(86) Internationale Anmeldenummer: PCT/EP2009/066564
(87) Internationale Veröffentlichungsnummer: WO 2010/066701

(56) Entgegenhaltungen:
- EP-A1- 1 674 332
- DE-A1- 10 009 038
- DE-A1- 10 334 220
- FR-A1- 2 771 687
- GB-A- 2 449 383
- US-A1- 2007 040 435

## Beschreibung

Die Erfindung betrifft einen Rastbeschlag zum Verrasten zweier Fahrzeugteile nach dem Oberbegriff des Anspruchs 1.

Ein derartiger Rastbeschlag weist ein erstes Beschlagteil, ein um eine Drehachse drehbar zum ersten Beschlagteil angeordnetes zweites Beschlagteil und mindestens einen am ersten Beschlagteil beweglich angeordneten Sperrriegel auf. Der Sperrriegel ist ausgebildet und vorgesehen, zum Verrasten des ersten Beschlagteils und des zweiten Beschlagteils in Eingriff mit einer Verzahnung des zweiten Beschlagteils gebracht zu werden und durch den Eingriff das erste Beschlagteil verdrehfest relativ zum zweiten Beschlagteil zu halten. Zum Lösen der Verrastung kann der mindestens eine Sperrriegel außer Eingriff mit der Verzahnung des zweiten Beschlagteils gebracht werden, so dass das erste Beschlagteil und das zweite Beschlagteil relativ zueinander verdreht werden können.

Solche Rastbeschläge finden beispielsweise bei einer Sitzverstellung eines Fahrzeugs Verwendung, beispielsweise bei einer Neigungsverstellung einer Rückenlehne, bei der der Rastbeschlag in verrastetem Zustand die Rückenlehne relativ zum Sitzteil eines Fahrzeugsitzes hält und zum Verstellen der Rückenlehne gelöst wird, so dass die Rückenlehne relativ zum Sitzteil verschwenkt werden kann.

Ein aus der DE 199 04 300 C1 bekannter Rastbeschlag weist zwei an einem ersten Beschlagteil verschieblich angeordnete Sperrriegel mit jeweils einer Verzahnung auf, die mit einer Verzahnung eines drehbar zum ersten Beschlagteil gelagerten zweiten Beschlagteils in Eingriff bringbar sind. Über axial von dem ersten Beschlagteil vorspringende Erhebungen sind zum einen die beiden Sperrriegel an dem ersten Beschlagteil geführt und ist zum anderen das erste Beschlagteil in einer Aussparung des zweiten Beschlagteils gelagert.

Ein Rastbeschlag dieser Art hält zwei Fahrzeugteile in Position zueinander dadurch, dass ein oder mehrere Sperrriegel, die am ersten Beschlagteil angeordnet sind, in Eingriff mit dem zweiten Beschlagteil stehen, so dass das erste Beschlagteil zum zweiten Beschlagteil verrastet ist und ein mit dem ersten Beschlagteil verbundenes Fahrzeugteil zu einem mit dem zweiten Beschlagteil verbundenen Fahrzeugteil arretiert ist. Eine grundsätzliche Anforderung bei einem derartigen Rastbeschlag ist, dass der Rastbeschlag auch bei infolge eines Unfalls auftretenden großen Belastungen die Fahrzeugteile sicher halten muss, um eine plötzliche und ruckartige Verstellung des einen Fahrzeugteils zum anderen Fahrzeugteil zu vermeiden und eine damit einhergehende Verletzungsgefahr zu bannen.

Die GB 2 449 383 A offenbart einen Rastbeschlag gemäß Oberbegriffs des Anspruchs 1, bei dem an einem ersten Beschlagteil feststehende Führungen und bewegliche Führungen angeordnet sind. Sperrriegel sind dabei jeweils zwischen einer feststehenden Führung und einer beweglichen Führung geführt. Die beweglichen Führungselemente sind über eine Feder in Richtung einer radial inneren Stellung vorgespannt und können an ihren äußeren Kanten jeweils eine Verzahnung tragen, die ausgebildet ist, bei einer unfallmäßigen Belastung nach außen gedrückt zu werden, um in Eingriff mit einer inneren Verzahnung eines zweiten Beschlagteils zu gelangen.

Aus der US 2007/0040435 A1 ist ein Rastbeschlag bekannt, bei dem Lagerelemente eines ersten Beschlagteils gleitend an einer Innenverzahnung eines zweiten Beschlagteils anliegen.

Der vorliegenden Erfindung liegt die Aufgabe zugrunde, einen Rastbeschlag zu schaffen, der auch bei einfacher und kostengünstiger Herstellung unfallbedingte Belastungen sicher aufnehmen kann.

Diese Aufgabe wird durch einen Gegenstand mit den Merkmalen des Anspruchs 1 gelöst.

Die vorliegende Erfindung geht von dem Gedanken aus, an dem ersten Beschlagteil zum einen ein oder mehrere Führungselemente zur verschieblichen Führung eines oder mehrerer Sperrriegel und zum anderen ein oder mehrere Lagerelemente zur Lagerung des ersten Beschlagteils an dem zweiten Beschlagteil vorzusehen. Die Führungselemente und die Lagerelemente sind voneinander unterschiedlich: die Führungselemente dienen der Führung der Sperrriegel, nicht aber der Lagerung des ersten Beschlagteils; die Lagerelemente hingegen dienen der Lagerung des ersten Beschlagteils an dem zweiten Beschlagteil, nicht aber der Führung der Sperrriegel.

Zudem ist an mindestens einem feststehend am ersten Beschlagteil angeordneten Führungselement eine zusätzliche Verzahnung vorgesehen, die im normalen Betrieb des Rastbeschlags und den dabei wirkenden normalen Belastungskräften keine Auswirkung auf den Betrieb des Rastbeschlags hat, bei Auftreten von großen Belastungen infolge eines Unfalls jedoch in Eingriff mit der Verzahnung am zweiten Beschlagteil gelangt und somit eine zusätzliche Verrastung des ersten Beschlagteils mit dem zweiten Beschlagteil herstellt. Durch die zusätzliche Verrastung wird das erste Beschlagteil auch bei einem Unfall sicher und zuverlässig in Position zum zweiten Beschlagteil gehalten, so dass ein plötzliches, ruckartiges Verstellen des ersten Beschlagteils zum zweiten Beschlagteil nicht oder zumindest nicht ohne weiteres möglich ist.

Bei unfallbedingten Belastungen ist das erste Beschlagteil somit zusätzlich zu der Verriegelung durch den mindestens einen Sperrriegel über die an dem mindestens einen Führungselement ausgebildete Verzahnung mit dem zweiten Beschlagteil verrastet, so dass auch bei einem Aufheben des Eingriffs des mindestens einen Sperrriegels mit dem zweiten Beschlagteil, beispielsweise infolge einer Verformung oder eines Bruchs des Sperrriegels, die Verrastung des Rastbeschlags nicht aufgehoben ist. Durch das Vorsehen funktional unterschiedlicher, getrennt am ersten Beschlagteil ausgebildeter Elemente zum einen zur Führung der Sperrriegel und zum anderen zur Lagerung des ersten Beschlagteils kann die Sicherheit bei einem Unfall damit erhöht werden, indem der Rastbeschlag auch bei den bei einem Unfall auftretenden Belastungen sicher verrastet wird. Zudem kann durch das Vorsehen der unterschiedlichen Elemente die Fertigung des ersten Beschlagteils vereinfacht werden.

Der mindestens eine Sperrriegel ist über das mindestens eine am ersten Beschlagteil angeordnete Führungselement radial zur Drehachse verschieblich am ersten Beschlagteil geführt. Beispielsweise kann jeder Sperrriegel über zwei Führungselemente verschieblich am ersten Beschlagteil angeordnet sein, wobei die Führungselemente radial verlaufende Führungsabschnitte aufweisen, entlang derer der Sperrriegel gleitend geführt ist. Ein jedes Führungselement bildet einen feststehend am ersten Beschlagteil angeordneten Abschnitt aus, an dem jeweils eine Verzahnung angeordnet sein kann, die bei unfallbedingter Belastung des Rastbeschlags mit der Verzahnung am zweiten Beschlagteil zur Herstellung der zusätzlichen Verrastung in Eingriff gelangen kann.

Das mindestens eine Führungselement und/oder das mindestens eine Lagerelement sind bevorzugt zumindest abschnittsweise so deformierbar, dass bei einer unfallbedingten Belastung die Verzahnung an dem mindestens einen Führungselement mit der Verzahnung des zweiten Beschlagteils in Eingriff gelangt. Dadurch, dass sich ein oder mehrere Führungselemente und/oder ein oder mehrere Lagerelemente bei Auftreten einer unfallbedingten Belastung verformen, gerät die Verzahnung eines oder mehrerer Führungselemente mit der Verzahnung des zweiten Beschlagteils in Eingriff und verrastet das erste Beschlagteil somit zusätzlich mit dem zweiten Beschlagteil. Die Verformung der Führungselemente kann dabei beispielsweise bei einem Schiefstellen der Sperrriegel an dem ersten Beschlagteil infolge einer umfänglich - also rotatorisch um die Drehachse - auf die Sperrriegel wirkenden Belastung auftreten. Die Verformung der Lagerelemente folgt hingegen vorzugsweise aus einer radial zur Drehachse wirkenden Belastung.

Die Verformung der beispielsweise aus Metall ausgebildeten Führungselemente und/oder Lagerelemente kann elastisch oder plastisch erfolgen, wobei im ersten Fall die zusätzliche Verrastung in zerstörungsfreier Weise und im zweiten Fall in zerstörender Weise erfolgt.

Das mindestens eine Lagerelement und das mindestens eine Führungselement sind als erhabene, axial in Richtung der Drehachse von einem Grundkörper des ersten Beschlagteils vorspringende, getrennte Abschnitte ausgebildet. Die Führungselemente und die Lagerelemente sind dann jeweils als in eine Aussparung des zweiten Beschlagteils vorspringende Erhebungen ausgebildet, wobei durch räumlich getrennte, beabstandete Anordnung der Führungselemente und der Lagerelemente an dem Grundkörper des ersten Beschlagteils die Fertigung des ersten Beschlagteils vereinfacht werden kann.

Zur Lagerung des ersten Beschlagteils am zweiten Beschlagteil weist das erste Beschlagteil ein oder mehrere Lagerelemente auf, die zur Lagerung gleitend am zweiten Beschlagteil anliegen. Die Verzahnung des zweiten Beschlagteils kann dabei beispielsweise als an einem ringförmigen Abschnitt umlaufende Innenverzahnung in einer Aussparung des zweiten Beschlagteils ausgebildet sein, wobei die am ersten Beschlagteil angeordneten, in die Aussparung vorspringenden Lagerelemente zur gleitenden Lagerung an der Verzahnung des zweiten Beschlagteils anliegen.

Die Verzahnung an dem Führungselement ist vorteilhafterweise an einem der Verzahnung des zweiten Beschlagteils zugewandten, entsprechend der Krümmung der Verzahnung des zweiten Beschlagteils gekrümmten Abschnitt ausgebildet und ist in einem Betriebszustand des Rastbeschlags von der Verzahnung des zweiten Beschlagteils beabstandet, so dass bei normalem Betrieb des Rastbeschlags die Verzahnung der Führungselemente nicht in Eingriff mit der Verzahnung des zweiten Rastbeschlags steht. Im normalen Betriebszustand kann somit durch Lösen des Eingriffs des einen oder der mehreren Sperrriegel mit der Verzahnung des zweiten Beschlagteils die Verrastung des ersten Beschlagteils mit dem zweiten Beschlagteil aufgehoben werden, so dass das erste Beschlagteil relativ zum zweiten Beschlagteil verdreht werden kann. Bei einer unfallbedingten Belastung hingegen gelangen ein oder mehrere Führungselemente mit ihrer Verzahnung mit der Verzahnung des zweiten Beschlagteils in Eingriff und verrasten den Rastbeschlag somit zusätzlich, so dass bei unfallbedingten Belastungen die Verrastung des Rastbeschlags nicht ohne weiteres aufgehoben werden kann.

Die Lagerelemente und die Führungselemente können so an dem ersten Beschlagteil angeordnet sein, dass umfänglich zwischen zwei Führungselementen ein Lagerelement vorgesehen ist. In Umfangsrichtung ergibt sich somit eine Anordnung von (aufeinander folgend) Führungselement, Lagerelement, Führungselement, Sperrriegel, Führungselement, Lagerelement, Führungselement usw.

In einer konkreten Ausgestaltung sind an dem ersten Beschlagteil drei um 120° zueinander versetzt angeordnete Sperrriegel über jeweils zwei Führungselemente radial zur Drehachse verschieblich gelagert. Es sind somit insgesamt sechs Führungselemente vorgesehen, die an jeweils einem der Verzahnung des zweiten Beschlagteils zugewandten Abschnitt eine Verzahnung tragen. Weiterhin sind an dem ersten Beschlagteil drei um ebenfalls 120° zueinander versetzte Lagerelemente vorgesehen, die im normalen Betrieb des Rastbeschlags das erste Beschlagteil am zweiten Beschlagteil lagern. Die Lagerelemente können dabei um 60° zu den Sperrriegeln versetzt sein, so dass die Lagerelemente in Umfangsrichtung regelmäßig zu den Sperrriegeln beabstandet sind.

Der der Erfindung zugrunde liegende Gedanke soll nachfolgend anhand der in den Figuren dargestellten Ausführungsbeispiele näher erläutert werden. Es zeigen:
- Fig. 1: eine perspektivische Teilschnittansicht eines Rastbeschlags;
- Fig. 2: eine perspektivische Ansicht einer Ausführungsform eines ersten Beschlagteils eines Rastbeschlags mit daran angeordneten Führungselementen und Lagerelementen;
- Fig. 3: eine schematische Schnittansicht des ersten Beschlagteils gemäß Fig. 2, gelagert an einem zweiten Beschlagteil eines Rastbeschlags, und
- Fig. 4A, 4B: Schnittansichten der Anordnung gemäß Fig. 3 bei einer unfallbedingten Belastung.

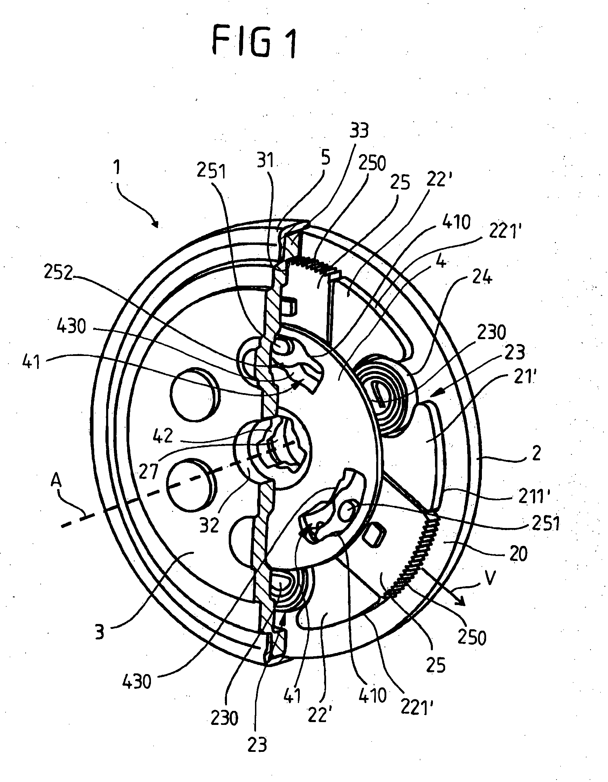

Fig. 1 zeigt in einer teilweise geschnittenen, perspektivischen Ansicht eine Ausführungsform eines Rastbeschlags 1, der beispielsweise bei einer Sitzverstellung zur Einstellung der Neigung einer Rückenlehne eines Fahrzeugsitzes Verwendung finden kann. Baugleiche Rastbeschläge 1 werden dabei beidseitig der Rückenlehne axial entlang einer Schwenkachse der Rückenlehne versetzt zueinander angeordnet und über eine sich entlang einer Drehachse A erstreckende Antriebswelle miteinander verbunden. Die Rastbeschläge 1 dienen dem Verrasten der Rückenlehne relativ zu einem Sitzteil des Fahrzeugsitzes und halten die Rückenlehne in Position zum Sitzteil. Über einen Betätigungshebel kann die die Rastbeschläge 1 miteinander verbindende Antriebswelle betätigt werden, dadurch die Verrastung der Rastbeschläge 1 gelöst und die Rückenlehne verstellt werden.

Der in Fig. 1 dargestellte Rastbeschlag 1 weist ein erstes Beschlagteil 2 auf, das über einen klemmend an dem ersten Beschlagteil 2 angeordneten Haltering 5 um die Drehachse A verschwenkbar mit einem zweiten Beschlagteil 3 verbunden ist. Bei Verwendung zum Verrasten einer Rückenlehne kann das erste Beschlagteil 2 beispielsweise mit dem Sitzteil und das zweite Beschlagteil 3 mit der Rückenlehne verbunden sein, wobei die Schwenkachse zwischen Rückenlehne und Sitzteil der Drehachse A des Rastbeschlags 1 entspricht.

Zum Verrasten sind an dem ersten Beschlagteil 2 drei um die Drehachse A um 120° zueinander versetzte Sperrriegel 25 angeordnet, die über Führungselemente 21', 22' in eine radiale Verstellrichtung V verschieblich an dem ersten Beschlagteil 2 gelagert sind und zum Verrasten des Rastbeschlags 1 über eine äußere Verzahnung 250 mit einer als Innenverzahnung an einem ringförmigen Abschnitt 33 ausgebildeten Verzahnung 31 des zweiten Beschlagteils 3 in Eingriff gebracht werden können.

In dem in Fig. 1 dargestellten Zustand befinden sich die Sperrriegel 25 in einer radial nach außen verschobenen Position, in der sie mit ihrer Verzahnung 250 in die Verzahnung 31 des zweiten Beschlagteils 3 eingreifen. In diesem Zustand ist der Rastbeschlag 1 verrastet, so dass das erste Beschlagteil 2 nicht relativ zum zweiten Beschlagteil 3 verschwenkt werden kann.

Bei der Ausführungsform gemäß Fig. 1 sind die die Sperrriegel 25 in radialer Richtung führenden Führungselemente 21', 22' als erhabene, in Richtung des zweiten Beschlagteils 3 von einem scheibenförmigen Grundkörper 20 vorspringende Abschnitte ausgebildet und dienen zum einen der radialen Führung der Sperrriegel 25 und zum anderen der Lagerung des ersten Beschlagteils 2 an dem zweiten Beschlagteil 3. Hierzu liegen die Führungselemente 21', 22' mit ihren äußeren Abschnitten 211', 221' an der als Innenverzahnung ausgebildeten Verzahnung 31 des zweiten Beschlagteils 3 gleitend an, so dass das erste Beschlagteil 2 um die Drehachse A relativ zum zweiten Beschlagteil 3 verschwenkbar ist.

Die Verrastung des Rastbeschlags 1 wird über die Sperrriegel 25 hergestellt, die in verrastetem Zustand über die Verzahnungen 250 mit der Verzahnung 31 des zweiten Beschlagteils 3 in Eingriff stehen. Die Betätigung der Sperrriegel 25 zum Verrasten des Rastbeschlags 1 oder zum Lösen der Verrastung erfolgt hierbei über ein zwischen dem ersten Beschlagteil 2 und dem zweiten Beschlagteil 3 angeordnetes Antriebselement 4, das scheibenförmig ausgebildet ist und eine zentrale Aufnahmeöffnung 42 zur Aufnahme einer die Beschlagteile 2, 3 an Aussparungen 27, 32 durchgreifenden Antriebswelle aufweist.

An dem Antriebselement 4 sind um die Drehachse A um 120° zueinander versetzte, baugleiche Kulissen 41 ausgebildet, in die jeweils ein Betätigungselement 251 eines Sperrriegels 25 eingreift. Das Betätigungselement 251 liegt jeweils an einem äußeren Kulissenabschnitt 410 der Kulisse 41 an und gleitet bei einem Verdrehen des Antriebselements 4 um die Drehachse A entlang des äußeren Kulissenabschnitts 410.

An dem Antriebselement 4 ist zudem rückseitig eine erhabene, vorspringend ausgebildete Betätigungsscheibe angeordnet, die an ihrem äußeren Umfang einen Führungsabschnitt 430 ausbildet, der über einen jeweils am unteren Ende der Sperrriegel 25 ausgebildeten Nocken 252 mit den am ersten Beschlagteil 2 gelagerten Sperrriegeln 25 in Kontakt steht.

In einem verrasteten Zustand, in dem die Sperrriegel 25 radial nach außen verschoben sind und über ihre Verzahnung 250 in Eingriff mit der Verzahnung 31 des zweiten Beschlagteils 3 stehen, so dass das erste Beschlagteil 2 nicht relativ zum zweiten Beschlagteil 3 verschwenkt werden kann, befindet sich das Betätigungselement 251 der Sperrriegel 25 jeweils in Anlage mit einem radial nach außen versetzten Abschnitt des äußeren Kulissenabschnitts 410, und gleichzeitig liegt der Nocken 252 der Sperrriegel 25 jeweils an einem ebenfalls radial nach außen versetzten Abschnitt des Führungsabschnitts 430 an. Über das Antriebselement 4 werden die Sperrriegel 25 somit in Eingriff mit der Verzahnung 31 des zweiten Beschlagteils 3 gehalten.

Zum Betätigen der Sperrriegel 25 wird das Antriebselement 4 um die Drehachse A - bei der Ansicht gemäß Fig. 1 entgegen dem Uhrzeigersinn - verschwenkt. Dabei gleiten das Betätigungselement 251 eines jeden Sperrriegels 25 entlang des äußeren Kulissenabschnitts 410 der jeweils zugeordneten Kulisse 41 und der am unteren Ende des Sperrriegels 25 ausgebildete Nocken 252 entlang des Führungsabschnitts 430, bis das Betätigungselement 251 in Anlage mit einem radial nach innen versetzten Abschnitt des äußeren Kulissenabschnitts 410 und der Nocken 252 in Anlage mit einem radial nach innen versetzten Abschnitt des Führungsabschnitts 430 tritt und dadurch der Sperrriegel 25 radial nach innen verschoben wird. In diesem entriegelten Zustand stehen die Sperrriegel 25 dann nicht mehr in Eingriff mit der Verzahnung 31 des zweiten Beschlagteils 3, so dass das erste Beschlagteil 2 von dem zweiten Beschlagteil 3 entriegelt ist und um die Drehachse A relativ zu dem zweiten Beschlagteil 3 verschwenkt werden kann.

Wie in Fig. 1 dargestellt, sind an dem ersten Beschlagteil 2 in Aufnahmen 23 Federelemente 24 angeordnet und über Halteelemente 230 an dem ersten Beschlagteil 2 gehalten. Die Federelemente 24 spannen das Antriebselement 4 relativ zum ersten Beschlagteil 2 in Richtung des verrasteten Zustands gemäß Fig. 1 vor, so dass der Rastbeschlag 1, wenn das Antriebselement 4 nicht betätigt ist, die Sperrriegel 25 in verrasteter Position hält und das erste Beschlagteil 2 relativ zum zweiten Beschlagteil 3 verriegelt ist.

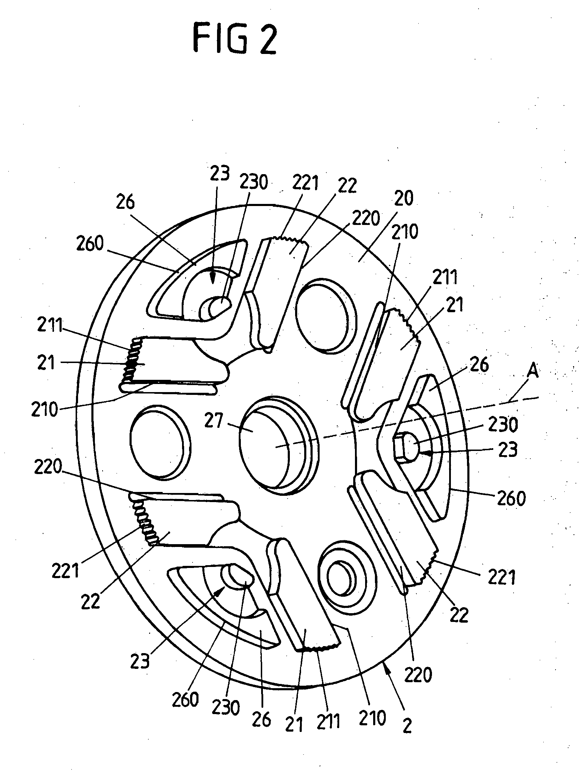

Fig. 2 zeigt in einer perspektivischen Ansicht eine Ausführungsform des ersten Beschlagteils 2, bei der Führungselemente 21, 22 zur Führung je eines Sperrriegels 25 (in Fig. 2 nicht dargestellt) und getrennt von den Führungselementen 21, 22 ausgebildete Lagerelemente 26 vorgesehen sind. Abgesehen von der Ausgestaltung des ersten Beschlagteils 2 entspricht der Aufbau und die Funktionsweise des dieses modifizierte erste Beschlagteil 2 verwendenden Rastbeschlags dem in Fig. 1 dargestellten und vorangehend geschilderten Rastbeschlag 1.

Die Führungselemente 21, 22 bilden jeweils paarweise parallel zueinander verlaufende Riegelführungsabschnitte 210, 220 aus, zwischen denen die Sperrriegel 25 geführt sind. Das erste Beschlagteil 2 ist zur Aufnahme von insgesamt drei Sperrriegeln 25 ausgebildet, so dass das erste Beschlagteil 2 insgesamt 6 Führungselemente 21, 22 aufweist.

Die Führungselemente 21, 22 sind als erhabene, in axialer Richtung vorspringende Abschnitte an einem scheibenförmigen Grundkörper 20 des ersten Beschlagteils 2 ausgebildet. Räumlich getrennt und als separate erhabene Abschnitte sind drei Lagerelemente 26 vorgesehen, die um 120° versetzt zueinander sind und jeweils einen äußeren gekrümmten Lagerabschnitt 260 aufweisen, der bei montiertem Rastbeschlag 1 (siehe Fig. 1) gleitend an der Verzahnung 31 des zweiten Beschlagteils 3 anliegt. Über die Lagerelemente 26 ist das erste Beschlagteil 2 um die Drehachse A verschwenkbar zum zweiten Beschlagteil 3 gelagert und kann, wenn die Sperrriegel 25 nicht in Eingriff mit der Verzahnung 31 des zweiten Beschlagteils 3 stehen, relativ zum zweiten Beschlagteil 3 verschwenkt werden.

Die Lagerelemente 26 sind um 120° zueinander und um 60° zu den jeweils benachbarten Sperrriegeln 25 versetzt und somit regelmäßig in Umfangsrichtung um die Drehachse A beabstandet an dem ersten Beschlagteil 2 angeordnet.

Ebenfalls sichtbar in Fig. 2 ist die im Bereich der Lagerelemente 26 und der Führungselemente 21, 22 ausgebildete Aufnahme 23 für die Federelemente 24 zum Vorspannen des Antriebselements 4.

Wie zudem aus Fig. 2 ersichtlich, sind an äußeren Abschnitten der Führungselemente 21, 22 jeweils Verzahnungen 211, 221 ausgebildet, die der Verzahnung 31 des zweiten Beschlagteils 3 zugewandt sind, in normalem Betriebszustand des Rastbeschlags 1 jedoch nicht mit der Verzahnung 31 des zweiten Beschlagteils 3 in Eingriff stehen. Wie vorangehend geschildert, erfolgt die Verriegelung des Rastbeschlags 1 in normalem Betrieb allein über die Sperrriegel 25, die zum Verrasten des Rastbeschlags 1 mit der Verzahnung 31 des zweiten Beschlagteils 3 in Eingriff oder zum Lösen der Verrastung außer Eingriff mit der Verzahnung 31 gebracht werden.

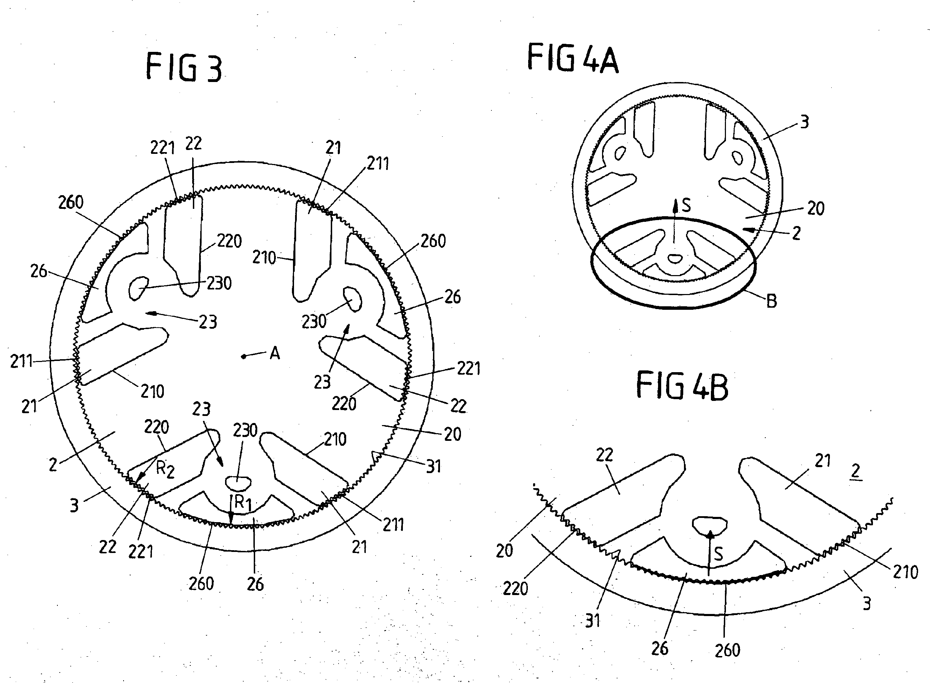

Fig. 3 und 4A, 4B zeigen das erste Beschlagteil 2 gemäß Fig. 2 an dem zweiten Beschlagteil 3. Fig. 3 zeigt hier den normalen Betriebszustand, während Fig. 4A und 4B einen Zustand bei Auftreten einer großen Belastung, beispielsweise einer unfallbedingten Belastung, und einer daraus resultierenden Relativbewegung des ersten Beschlagteils 2 zum zweiten Beschlagteil 3 in eine Verschieberichtung S zeigt. Fig. 4B zeigt den Ausschnitt B aus Fig. 4A vergrößert.

In normalem Betrieb, wie in Fig. 3 dargestellt, ist das erste Beschlagteil 2 über die Lagerelemente 26 gleitend an der als Innenverzahnung ausgebildeten Verzahnung 31 des zweiten Beschlagsteils 3 gelagert. In diesem Zustand stehen die Verzahnungen . 211, 221 der Führungselemente 21, 22 nicht mit der Verzahnung 31 des zweiten Beschlagteils 3 in Eingriff - bedingt dadurch, dass die Verzahnungen 211, 221 gegenüber den Lagerabschnitten 260 radial nach innen versetzt sind und einen kleineren Radius R2 um die Drehachse A als die Lagerabschnitte 260 (Radius R1) aufweisen -, so dass das erste Beschlagteil 2 relativ zum zweiten Beschlagteil 3 verschwenkt werden kann, wenn die Sperrriegel 25 außer Eingriff mit der Verzahnung 31 des zweiten Beschlagteils 3 gebracht werden.

Kommt es jedoch, insbesondere infolge einer unfallbedingten Belastung und dabei auftretender großer Kräfte, zu einer Relativbewegung des zweiten Beschlagteils 3 zum ersten Beschlagteil 2 in die Verschieberichtung S, bedingt durch eine Verformung des in Fig. 4A und 4B unten dargestellten Lagerelements 26, so treten die Verzahnungen 210, 220 der das untere Lagerelement 26 einrahmenden Führungselemente 21, 22 in Eingriff mit der Verzahnung 31 des zweiten Beschlagteils 3, so dass über die Führungselemente 21, 22 eine zusätzliche Verrastung des ersten Beschlagteils 2 relativ zum zweiten Beschlagteil 3 hergestellt wird. Dies führt dazu, dass auch bei großen bei einem Unfall auftretenden Kräften der Rastbeschlag 1 sicher verrastet und ein plötzliches, ruckartiges Verstellen nicht oder zumindest nicht ohne weiteres möglich ist.

Die Lagerelemente 26 sind bevorzugt so ausgebildet und dimensioniert, dass sie sich bei einem Unfall in gezielter Weise verformen und so einen Eingriff eines oder mehrerer der Führungselemente 21, 22 mit der Verzahnung 31 des zweiten Beschlagteils 3 ermöglichen. Die Führungselemente 21, 22 können dabei so ausgebildet sein, dass die Führungselemente 21, 22 in Eingriff mit der Verzahnung 31 des zweiten Beschlagteils 3 treten können, gleichzeitig jedoch ein an der gegenüberliegenden Seite des ersten Beschlagteils 2 angeordneter Sperrriegel 25 (in Fig. 4A oben) nach Möglichkeit nicht außer Eingriff mit der Verzahnung 31 des zweiten Beschlagteils 3 gelangt. Hierzu ist der Abstand der Führungselemente 21, 22 von der Verzahnung 31 kleiner zu dimensionieren als die Wegstrecke, die erforderlich ist, um einen Sperrriegel 25 außer Eingriff mit der Verzahnung 31 des zweiten Beschlagteils 3 zu bringen.

Bei einer anderen unfallbedingten Belastung, bei der (gegebenenfalls zusätzlich) Kräfte in Umfangsrichtung wirken, können sich auch die Führungselemente 21, 22 zumindest abschnittsweise verformen, bedingt durch ein Schiefstellen der Sperrriegel 25.

Der der Erfindung zugrunde liegende Gedanke ist nicht auf die vorangehend geschilderten Ausführungsbeispiele beschränkt. Insbesondere ist die Erfindung auch einsetzbar bei Rastbeschlägen, die mehr oder weniger als drei Sperrriegel, beispielsweise zwei oder vier Sperrriegel, aufweisen. Zudem können Rastbeschläge der geschilderten Art auch bei anderen Verstellvorrichtungen als Sitzneigungsverstellungen eingesetzt werden.

### Bezugszeichenliste

- 1: Rastbeschlag
- 2: Erstes Beschlagteil
- 20: Grundkörper
- 21, 22, 21', 22': Führungselement
- 210, 220, 211, 221: Riegelführungsabschnitt Verzahnung
- 211', 221': Abschnitt
- 23: Aufnahme
- 230: Halteelement
- 24: Federelement
- 25: Sperrriegel
- 250: Verzahnung
- 251: Betätigungselement
- 252: Nocken
- 26: Lagerelement
- 260: Lagerabschnitt
- 27: Aussparung
- 3: Zweites Beschlagteil
- 31: Verzahnung
- 32: Aussparung
- 33: Ringförmiger Abschnitt
- 4: Antriebselement
- 41: Kulisse
- 410: Äußerer Kulissenabschnitt
- 42: Aufnahmeöffnung
- 430: Führungsabschnitt
- 5: Haltering
- A: Drehachse
- B: Ausschnitt
- R1, R2: Radius
- S: Verschieberichtung
- V: Verstellrichtung

## Patentansprüche

1. Rastbeschlag zum Verrasten zweier Fahrzeugteile, mit
- einem ersten Beschlagteil,
- einem um eine Drehachse drehbar zum ersten Beschlagteil angeordneten zweiten Beschlagteil und
- mindestens einem am ersten Beschlagteil verschieblich angeordneten Sperrriegel, der ausgebildet und vorgesehen ist, zum Verrasten des ersten Beschlagteils und des zweiten Beschlagteils in Eingriff mit einer Verzahnung des zweiten Beschlagteils und zum Lösen der Verrastung außer Eingriff mit der Verzahnung des zweiten Beschlagteils gebracht zu werden,
- mindestens ein an dem ersten Beschlagteil (2) angeordnetes Führungselement (21, 22) zur Führung des mindestens einen Sperrriegels (25) und wobei an dem mindestens einen Führungselement (21, 22) eine Verzahnung (211, 221) ausgebildet und vorgesehen ist, bei unfallbedingter Belastung mit der Verzahnung (31) des zweiten Beschlagteils (3) in Eingriff zur gelangen,
**gekennzeichnet durch**
- mindestens ein an dem ersten Beschlagteil (2) angeordnetes, von dem mindestens einen Führungselement (21, 22) unterschiedliches Lagerelement (26), das zur Lagerung des ersten Beschlagteils (2) an dem zweiten Beschlagteil (3) gleitend mit der Verzahnung (31) des zweiten Beschlagteils (3) zusammenwirkt,
und wobei das mindestens eine Lagerelement (26) und das mindestens eine Führungselement (21, 22) als erhabene, axial von einem Grundkörper (20) des ersten Beschlagteils (2) vorspringende, getrennte Abschnitte ausgebildet sind.

2. Rastbeschlag nach Anspruch 1, **dadurch gekennzeichnet, dass** das mindestens eine Führungselement (21, 22) und/oder das mindestens eine Lagerelement (21, 22) zumindest abschnittsweise so deformierbar sind, dass bei einer unfallbedingten Belastung die Verzahnung (211, 221) an dem mindestens einen Führungselement (21, 22) mit der Verzahnung (31) des zweiten Beschlagteils (3) in Eingriff gelangt.

3. Rastbeschlag nach einem der vorangehenden Ansprüche, **dadurch gekennzeichnet, dass** die Verzahnung (31) des zweiten Beschlagteils (3) als an einem ringförmigen Abschnitt (33) des zweiten Beschlagteils (3) umlaufende Innenverzahnung ausgebildet ist.

4. Rastbeschlag nach Anspruch 3, **dadurch gekennzeichnet, dass** das mindestens eine Lagerelement (26) über einen gekrümmten Führungsabschnitt (260) zur drehbaren Lagerung des ersten Beschlagteils (2) an dem zweiten Beschlagteil (3) gleitend mit der Verzahnung (31) des zweiten Beschlagteils (3) zusammenwirkt.

5. Rastbeschlag nach Anspruch 3 oder 4, **dadurch gekennzeichnet, dass** die Verzahnung (211, 221) des mindestens einen Führungselements (21, 22) an einem der Verzahnung (31) des zweiten Beschlagteils (3) zugewandten, gekrümmten Abschnitt des mindestens einen Führungselementes (21, 22) ausgebildet und in einem Betriebszustand des Rastbeschlags (1) von der Verzahnung (31) des zweiten Beschlagteils (3) beabstandet ist.

6. Rastbeschlag nach einem der vorangehenden Ansprüche, **dadurch gekennzeichnet, dass** an dem ersten Beschlagteil (2) umfänglich zwischen zwei Führungselementen (21, 22) jeweils ein Lagerelement (26) angeordnet ist.

7. Rastbeschlag nach einem der vorangehenden Ansprüche, **dadurch gekennzeichnet, dass** an dem ersten Beschlagteil (2)
- drei um 120°zueinander versetzte Lagerelemente (26),
- sechs Führungselemente (21, 22) und
- drei um 120° zueinander versetzte Sperrriegel (25)
angeordnet sind, wobei die Sperrriegel (25) über jeweils zwei Führungselemente (21, 22) radial zur Drehachse (A) verschieblich am ersten Beschlagteil (2) geführt sind.

8. Rastbeschlag nach Anspruch 7, **dadurch gekennzeichnet, dass** die Lagerelemente (26) jeweils um 60° versetzt zu einem benachbarten Sperrriegel (25) angeordnet sind.

## Claims

1. A latch fitting for latching two vehicle parts, comprising
- a first fitting part,
- a second fitting part rotatably arranged about an axis of rotation relative to the first fitting part, and
- at least one locking bolt shiftably arranged on the first fitting part, which is formed and provided to be brought in engagement with a toothing of the second fitting part for latching the first fitting part and the second fitting part, and to be brought out of engagement with the toothing of the second fitting part for releasing the latching,
- at least one guiding element (21, 22) arranged on the first fitting part (2) for guiding the at least one locking bolt (25),
wherein on the at least one guiding element (21, 22) a toothing (211, 221) is formed and provided to get in engagement with the toothing (31) of the second fitting part (3) under a load caused by an accident,
**characterized by**
- at least one bearing element (26) arranged on the first fitting part (2), which is different from the at least one guiding element (21, 22) and which for supporting the first fitting part (2) on the second fitting part (3) slidingly cooperates with the toothing (31) of the second fitting part (3),
And wherein the at least one bearing element (26) and the at least one guiding element (21, 22) are formed as raised, separate portions axially protruding from a base body (20) of the first fitting part (2).

2. The latch fitting according to claim 1, **characterized in that** the at least one guiding element (21, 22) and/or the at least one bearing element (21, 22) at least sectionally are deformable such that under a load caused by an accident the toothing (211, 221) on the at least one guiding element (21, 22) gets in engagement with the toothing (31) of the second fitting part (3).

3. The latch fitting according to any of the preceding claims, **characterized in that** the toothing (31) of the second fitting part (3) is formed as internal toothing extending around a ring-shaped portion (33) of the second fitting part (3).

4. The latch fitting according to claim 3, **characterized in that** via a curved guide portion (260) the at least one bearing element (26) slidingly cooperates with the toothing (31) of the second fitting part (3) for rotatably supporting the first fitting part (2) on the second fitting part (3).

5. The latch fitting according to claim 3 or 4, **characterized in that** the toothing (211, 221) of the at least one guiding element (21, 22) is formed on a curved portion of the at least one guiding element (21, 22) facing the toothing (31) of the second fitting part (3) and in an operating state of the latch fitting (1) is spaced from the toothing (31) of the second fitting part (3).

6. The latch fitting according to any of the preceding claims, **characterized in that** on the first fitting part (2) a bearing element (26) each is arranged circumferentially between two guiding elements (21, 22).

7. The latch fitting according to any of the preceding claims, **characterized in that** on the first fitting part (2)
- three bearing elements (26) offset to each other by 120°,
- six guiding elements (21, 22), and
- three locking bolts (25) offset to each other by 120°
are arranged, wherein via two guiding elements (21, 22) each of the locking bolts (25) are guided on the first fitting part (2) in a manner shiftable radially to the axis of rotation (A).

8. The latch fitting according to claim 7, **characterized in that** the bearing elements (26) are arranged offset to an adjacent locking bolt (25) by 60° each.

## Revendications

1. Ferrure à cliquet pour l'encliquetage de deux parties de véhicule, avec
- une première partie de ferrure,
- une deuxième partie de ferrure disposée autour d'un axe de rotation, de manière rotative par rapport à la première partie de ferrure et
- au moins un verrou de blocage disposé de manière coulissante sur la première partie de ferrure, qui est conçu et prévu pour être amené en engrènement avec une denture de la deuxième partie de ferrure pour l'encliquetage de la première partie de ferrure et de la deuxième partie de ferrure et amené hors engrènement avec la denture de la deuxième partie de ferrure pour le détachement de l'encliquetage,
- au moins un élément de guidage (21, 22), disposé sur la première partie de ferrure (2), pour le guidage de l'au moins un verrou de blocage (25) et
une denture (211, 221) étant conçue et prévue sur l'au moins un élément de guidage (21, 22) pour être amené en engrènement avec la denture (31) de la deuxième partie de ferrure (3) dans le cas d'une sollicitation due à un accident,
**caractérisée par**
- au moins un élément de palier (26) disposé sur la première partie de ferrure (2), différent de l'au moins un élément de guidage (21, 22), qui interagit, pour le logement de la première partie de ferrure (2) sur la deuxième partie de ferrure (3), de manière glissante avec la denture (31) de la deuxième partie de ferrure (3),
dans lequel l'au moins un élément de palier (26) et l'au moins un élément de guidage (21, 22) sont conçus comme des portions séparées, surélevées et dépassant axialement d'un corps de base (20) de la première partie de ferrure (2).

2. Ferrure à cliquet selon la revendication 1, **caractérisée en ce que** l'au moins un élément de guidage (21, 22) et/ou l'au moins un élément de palier (21, 22) sont déformables au moins sur certaines portions de façon à ce que, lors d'une sollicitation due à un accident, la denture (211, 221) soit amenée en engrènement sur l'au moins un élément de guidage (21, 22) avec la denture (31) de la deuxième partie de ferrure (3).

3. Ferrure à cliquet selon l'une des revendications précédentes, **caractérisée en ce que** la denture (31) de la deuxième partie de ferrure (3) est conçue comme une denture interne entourant une portion annulaire (33) de la deuxième partie de ferrure (3).

4. Ferrure à cliquet selon la revendication 3, **caractérisée en ce que** l'au moins un élément de palier (26) interagit, par l'intermédiaire d'une portion de guidage incurvée (260), pour le logement rotatif de la première partie de ferrure (2) sur la deuxième partie de ferrure (3), de manière coulissante avec la denture (31) de la deuxième partie de ferrure (3).

5. Ferrure à cliquet selon la revendication 3 ou 4, **caractérisée en ce que** la denture (211, 221) de l'au moins un élément de guidage (21, 22) est prévue sur une portion incurvée de l'au moins un élément de guidage (21, 22), orientée vers la denture (31) de la deuxième partie de ferrure (3) et, dans un état de fonctionnement de la ferrure à cliquet (1), se trouve à une certaine distance de la denture (31) de la deuxième partie de ferrure (3).

6. Ferrure à cliquet selon l'une des revendications précédentes, **caractérisée en ce que**, sur la circonférence de la première partie de ferrure (2), entre deux éléments de guidage (21, 22), se trouve un élément de palier (26).

7. Ferrure à cliquet selon l'une des revendications précédentes, **caractérisée en ce que**, sur la première partie de ferrure (2)
- trois éléments de paliers (26) décalés de 120° entre eux,
- six éléments de guidage (21, 22) et
- trois verrous de blocage (25) décalés de 120° entre eux sont prévus, les verrous de blocage (25) étant guidés chacun par l'intermédiaire de deux éléments de guidage (21, 22) de manière coulissante radialement par rapport à l'axe de rotation (A) sur la première partie de ferrure (2).

8. Ferrure à cliquet selon la revendication 7, **caractérisée en ce que** les éléments de palier (26) sont décalés chacun de 60° par rapport à un verrou de blocage (25) adjacent.
